# EUROPÄISCHE PATENTSCHRIFT

(11) **EP 1 093 956 B1**
(45) Veröffentlichungstag und Bekanntmachung des Hinweises auf die Patenterteilung: **21.07.2004**
(21) Anmeldenummer: 00119230.1
(22) Anmeldetag: 06.09.2000
(51) Int. Cl.: B60K 41/20, B60K 17/34

(54) **Steuersystem zur variablen Drehmomentverteilung für ein vierradgetriebenes Fahrzeug**
Control of torque distribution for a four wheel driven vehicle
Commande de distribution du couple pour véhicule à quatre roues motrices

(30) Priorität: 19.10.1999 DE 19950205
(43) Veröffentlichungstag der Anmeldung: 25.04.2001
(73) Patentinhaber: Bayerische Motoren Werke Aktiengesellschaft, 80809 München (DE)
(72) Erfinder: Meier, Kurt, 85716 Unterschleissheim (DE)

(56) Entgegenhaltungen:
- EP-A- 0 453 931
- EP-A- 0 574 962
- DE-A- 4 002 821
- DE-A- 4 112 638
- US-A- 5 093 790

## Beschreibung

Die Erfindung bezieht sich auf ein Steuersystem zur variablen Drehmomentverteilung für ein vierradgetriebenes Fahrzeug nach dem Oberbegriff des Patentanspruchs 1.

Ein derartiges Steuersystem ist beispielsweise in der DE 40 02 821 A1 beschrieben. Bekannt ist demnach eine Drehmomentverteilungseinrichtung zum Verändern des Drehmomentverteilungsverhältnisses zwischen den Vorder- und Hinterrädern durch entsprechende Steuerung einer Reibungskupplung als Längssperre. Durch die Festlegung eines Drehmomentverteilungsverhältnisses kann sowohl das Fahrverhalten als auch die Traktion eines Fahrzeuges erheblich beeinflußt werden. Ein ähnliches Steuersystem ist auch aus der EP 0 911 205 A2 bekannt. Steuerbare Kupplungen als Längssperren sind jedoch aufwendig, schwer und teuer.

Weiterhin ist aus der EP 0 574 962 ein Steuersystem zur variablen Drehmomentverteilung für ein vierradgetriebenes Fahrzeug mit einem Bremsregelsystem bekannt, durch das ein radselektiver Bremseingriff möglich ist, wobei eine nicht-variable Längssperre (1) mit vorgegebenem Drehmomentverteilungsverhältnis (TBR-VG=3) vorgesehen ist und, wenn ein Schlupf vorliegt, zur Änderung des Drehmomentverteilungsverhältnisses zwischen den Rädern (4, 5) der Hinterachse (3) und den Rädern (6, 7) der Vorderachse (2) ein Bremseingriff an den Rädem (6, 7) der Achse (2) vorgenommen wird, deren Drehmomentübertragungsanteil im Verhältnis zur anderen Achse (3) verkleinert werden soll.

Weiterhin ist aus der DE 40 02 821 A1 bekannt, bei einem vierradgetriebenen Fahrzeug einen radselektiven Bremseingriff an einem Rad auszuführen, bei dem Schlupf aufgetreten ist. Hierdurch findet eine Stabilitätsregelung erst statt, wenn bereits eine Instabilität aufgetreten ist. Dabei muß das Problem gelöst werden, daß die Referenz-Fahrzeuggeschwindigkeit zur Erkennung eines schlupfenden Antriebs-Rades nicht wie üblich auf der Grundlage der Umfangsgeschwindigkeiten der nicht angetriebenen Räder ermittelt werden kann.

Weiterhin bedeutet die Verwendung hoher Drehmomentverteilungsverhältnisse (Torque Bias Ratios TBR = Torque_high/Torque_low) Probleme bei der Berechnung der Referenzgeschwindigkeit für Schlupfregelsysteme aber auch starke Verspannungen im Antriebsstrang bei Kurvenfahrt.

Es ist Aufgabe der Erfindung, ein Steuersystem zum Verändern des Drehmomentverteilungsverhältnisses eingangs genannter Art im Hinblick auf die Sicherheit, die Kosten und den Bauraum zu verbessern.

Diese Aufgabe wird durch die Merkmale des Patentanspruchs 1 gelöst. Vorteilhafte Weiterbildungen der Erfindung sind die Gegenstände der abhängigen Patentansprüche.

Erfindungsgemäß wird bei einem Steuersystem zur variablen Drehmomentverteilung für ein vierradgetriebenes Fahrzeug mit einem Bremsregelsystem, durch das ein radselektiver Bremseingriff möglich ist, eine nicht-variable Längssperre mit vorgegebenem Drehmomentverteilungsverhältnis vorgesehen. Zur Änderung des Drehmomentverteilungsverhältnisses wird an den Rädern der Achse, deren Drehmomentübertragungsanteil im Verhältnis zur anderen Achse verkleinert werden soll, ein symmetrischer Bremseingriff vorgenommen, wenn kein Schlupf vorliegt.

Bremsregelsysteme für radselektive Bremseingriffe sind insbesondere als Kombinationen von Antiblockier-, Antischlupf- und Fahrdynamikregelsystemen bekannt. Ein symmetrischer Bremseingriff bedeutet, daß an beiden Rädern der Achse, deren Drehmomentübertragungsanteil im Verhältnis zum Drehmomentübertragungsanteil der andern Achse verkleinert werden soll, das gleiche Bremsmoment aufgebracht wird.

Durch den anpaßbaren Bremseingriff ohne Schlupfsituation können die Vorteile eines variablen Drehmomentübertragungsverhältnisses derart erreicht werden, daß bereits vor dem Auftreten einer Instabilität entsprechend den Anforderungen bei verschiedenen Antriebszuständen die Stabilität höht wird. Z. B. wird der Drehmomentübertragungssanteil an den Rädern der Hinterachse beim Anfahren oder der Drehmomentübertragungsanteils an den Rädern der Vorderachse bei Kurvenfahrt erhöht. Die Einstellung des Drehmomentübertragungsverhätnisses wird jedoch nicht ausschließlich durch Bremseingriffe realisiert, da durch die ständige Regelung zu laute Geräusche und zu hohe Verspannungen des Antriebsstranges entstehen können. Durch die grundsätzliche Verwendung einer einfachen Längssperre mit einem festen, vorwiegend benötigten Basis-Drehmomentübertragunsverhältnis werden diese Nachteile beseitigt. Die Änderung des Drehmomentübertragungsverhältnisses durch den Bremseingriff wird bei Bedarf beispielsweise abhängig vom Lenkwinkel, von der Radlast, vom Reibwert an den einzelnen Rädern, vom Gierwinkel, von der Gierwinkelgeschwindigkeit, vom Schwimmwinkel, von der Querbeschleunigung, von der Steigung bzw. vom Gefälle und von anderen, den momentanen Fahrzustand beschreibenden ohnehin vorhandenen Betriebsparametern vorgenommen.

In einer ersten Alternative gemäß einer vorteilhaften Weiterbildung der Erfindung wird das Motormoment automatisch um den Betrag erhöht, der dem Gesamtbremsmoment des Bremseingriffes entspricht, um keine Reduzierung des Gesamttraktionsmomentes zu erhalten.

In einer zweiten Alternative gemäß einer vorteilhaften Weiterbildung der Erfindung erhält der Fahrer eine vorzugsweise optische, akustische oder haptische Empfehlung zur Motormomenterhöhung, bis eine Motormomenterhöhung durch die entsprechende Betätigung des Fahrpedals um den Betrag erreicht ist, der dem Gesamtbremsmoment des Bremseingriffes entspricht. Sollte ein Fahrer keine automatische Motormomenterhöhung wünschen, kann er hierdurch selbst entscheiden, ob er eine Motormomenterhöhung für erforderlich hält.

In der Zeichnung ist ein Ausführungsbeispiel der Erfindung dargestellt. Es zeigt für jeweils dieselben momentan möglichen Reibwerte an den Rädern
- Fig. 1: ein vierradgetriebenes Fahrzeug ohne Bremseingriff, das eine Längssperre aufweist, die für die feste Einstellung eines relativ kleinen Drehmomentübertragungsverhältnisses ausgelegt ist,
- Fig. 2: ein vierradgetriebenes Fahrzeug ohne Bremseingriff, das eine Längssperre aufweist, die für die feste Einstellung eines relativ großen Drehmomentübertragungsverhältnisses ausgelegt ist sowie
- Fig. 3: ein vierradgetriebenes Fahrzeug mit Bremseingriff, das die in Fig. 1 gezeigte Längssperre aufweist.

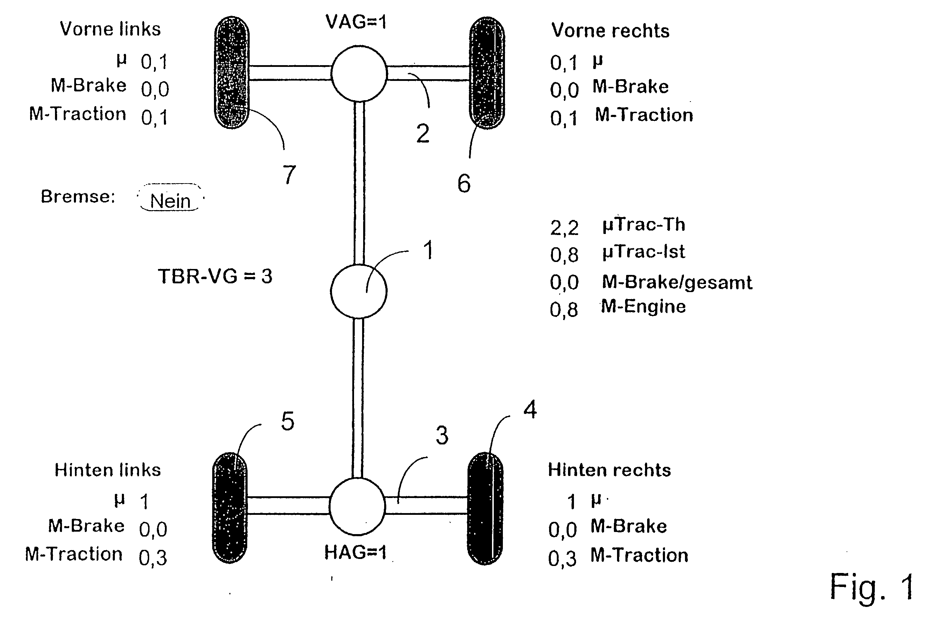

In den Figuren 1 bis 3 ist jeweils ein vierradgetriebenes Fahrzeug mit einer festen, also nicht-variablen Längssperre 1, mit je einem Achsdifferential für die Vorderachse 2 und die Hinterachse 3 sowie mit Rädern 4, 5, 6 und 7 dargestellt. Zur Vereinfachung wird hier von offenen Achsdifferentialen (VAG=1 und HAG=1) ausgegangen.

Die Räder 6 und 7 der Vorderachse 2 sollen beispielsweise je einen momentan möglichen Reibwert von µ=0,1 aufweisen; d.h. es liegt noch kein auszuregelnder Schlupf vor. Die Räder 4 und 5 der Hinterachse 3 sollen beispielsweise je einen momentan möglichen Reibwert von µ=1 aufweisen. Sämtliche Momente werden normiert entsprechend den Reibwerten zwischen 0 und 1 angegeben.

In Fig. 1 ist die Längssperre 1 für ein festes Basis-Drehmomentübertragungsverhältnis TBR-VG=3 ausgelegt. D. h. die Räder 4 und 5 der Hinterachse 3 übertragen ohne Bremseingriff das 3-fache Traktionsmoment M-Traction vom Traktionsmoment M-Traction an den Räder 6 und 7 der Vorderachse 2. Bei einem Reibwert von µ=0,1 bzw. einem maximal möglichen Traktionsmoment M-Traction=0,1 jeweils an den Rädern 6 und 7 der Vorderachse 2 kann also bei Vorliegen des festen Drehmomentübertragungsverhältnisses TBR-VG=3 an den Rädern 4 und 5 der Hinterachse 3 jeweils nur ein Traktionsmoment von M-Traction=0,3 übertragen werden. Das von der Brennkraftmaschine aufzubringende Gesamtdrehmoment ist hier M-Engine=0,8 und setzt sich aus der Summe (µTrac-Ist) der Traktionsmomente M-Traction an allen Rädern 4, 5, 6 und 7 zusammen. In Fig. 1 ist der Bremseingriff (Bremse=Nein) ausgeschaltet. Es liegen keine Bremsmomente vor (M-Brake=0).

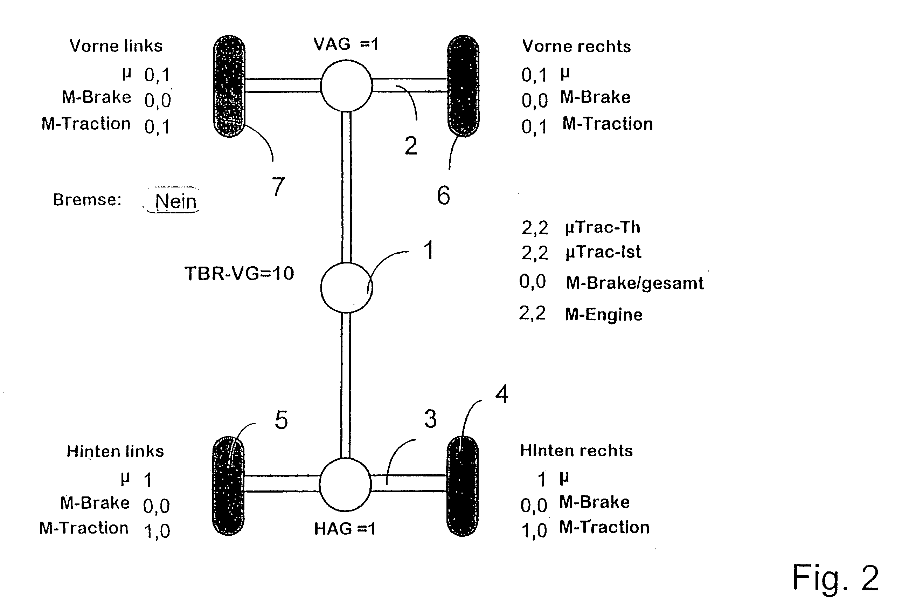

Würde ein höheres Drehmomentübertragungsverhältnis TBR-VG einstellbar sein, könnte aufgrund des maximal möglichen Reibwertes µ=1 jeweils an den Rädern 4 und 5 ein Traktionsmoment von bis zu M-Traction=1,0 erreicht werden. Dieses maximal mögliche Traktionsmoment von M-Traction=1,0 wäre bei den gegebenen Reibwerten µ ohne Bremseingriff durch eine Längssperre 1 mit einem Drehmomentübertragungsverhältnisses von TBR-VG=10 erreichbar. Dieser Fall ist in Fig. 2 dargestellt. Ein derartiges Basis-Drehmomentübertragungsverhältnis wäre jedoch für die meisten Fahrzustände zu hoch. Eine Längssperre mit variablem Drehmomentübertragungsverhältnis ist zu aufwendig.

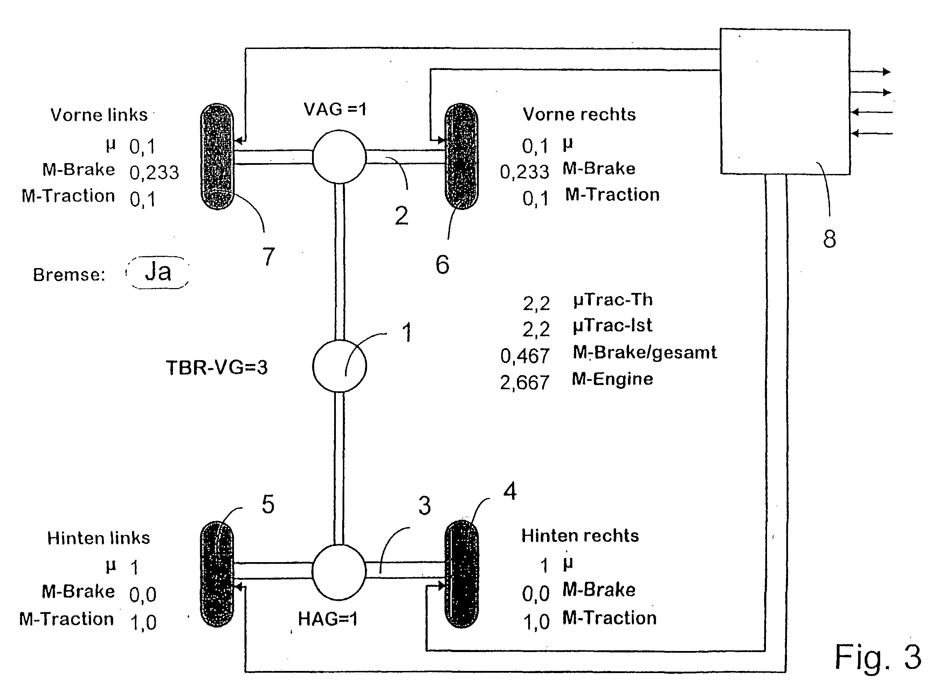

In Fig. 3 wird die Erfindung verdeutlicht. Hier weist das Fahrzeug zusätzlich ein Steuergerät 8 als Teil eines Bremsregelsystems auf, durch das ein radselektiver Bremseingriff möglich ist. Dazu ist das Steuergerät 8 mit den hier nicht dargestellten Bremsaktuatoren der Räder 4, 5, 6 und 7 verbunden. Das Steuergerät 8 weist vorzugsweise Signaleingänge zur Erfassung von den jeweiligen Fahrzustand wiedergebenden Betriebsparametem (z. B. Lenkwinkel, Beschleunigung, Gierwinkel usw.) auf. Insbesondere werden im Steuergerät, 8 die momentan möglichen Reibwerte µ erfaßt Weiterhin ist dem Steuergerät 8 das durch die Längssperre 1 übertragbare Drehmomentverteilungsverhältnis TBR-VG=3 bekannt. Im Steuergerät 8 sind vorzugsweise die für das Steuersystem zur variablen Drehmomentverteilung notwendigen Funktionen integriert.

Im vorliegenden Beispiel soll das aufgrund der vorliegenden Reibwerte µ maximal mögliche Traktionsmoment M-Traction= 1,0 jeweils an den Rädern 4 und 5 trotz einer Längssperre 1 mit einem Basis-Drehmomentübertragungsverhältnis von nur TBR-VG=3 mittels des erfindungsgemäßen symmetrischen Bremseingriffes erreicht werden. Vorraussetzung ist, daß kein Schlupf (Schlupf: µ≈0) in dem Sinne vorliegt, daß ein Antiblockier-, Antischlupf- und/oder Fahrdynamikregelung tätig werden muß. Letztere Regelung hat gegenüber dem erfindungsgemäßen Steuersystem eine höhere Priorität, da dann bereits eine Instabilität vorliegt.

Im Beispiel nach Fig. 3 wird erfindungsgemäß zunächst gemäß den Reibwerten µ das maximal mögliche Gesamttraktionsmoment µTrac-Th ermittelt. Dieses Gesamttraktionsmoment ist die Summe der maximal möglichen Traktionsmomente M-Traction, die über die Räder 4, 5, 6 und 7 übertragbar sind; also 0,1+0,1+1+1=2,2. Tatsächlich übertragen wird ohne Bremseingriff jedoch nur ein Gesamttraktionsmoment µTrac-Ist von 0,1+0,1+0,3+0,3=0,8 (vgl. Fig. 1). Dieses Differenzmoment von 1,4 muß durch das Gesamtbremsmoment (M-Brake Vorne links und M-Brake Vorne rechts) des symmetrischen Bremseingriffes kompensiert werden. Hierzu wird an den Rädern 6 und 7 der Vorderachse 2 das gleiche Bremsmoment M-Brake aufgebracht. Zu beachten ist dabei, daß sich dieses Bremsmoment entsprechend dem Drehmomentverteilungsverhältnis TBR-VG=3 auswirkt; d.h. im vorliegenden Fall, daß das notwendige Gesamtbremsmoment nur 1/3 des Differenzmoments ist. Daher ist das jeweils an den Rädern 6 und 7 der Vorderachse 2 aufzubringende Bremsmoment in etwa M-Brake = 0,233. Durch diesen symmetrischen Bremseingriff wird das Drehmomentübertragungsverhältnis so verändert, wie wenn ohne Bremseingriff eine Längssperre 1 mit einem Drehmomentübertragungsverhältnis von TBR-VG=10 vorliegen würde.

Das Motormoment M-Engine bzw. das Drehmoment der Brennkraftmaschine muß vorteilhafterweise hierbei durch die entsprechende Betätigung des Fahrpedals oder automatisch um den Betrag 0,467 erhöht werden, der dem Gesamtbremsmoment des Bremseingriffes entspricht, um keine Reduzierung des Gesamttraktionsmomentes µTrac-Ist zu erhalten.

Ergänzend wird daraufhin gewiesen, daß im vorliegenden Ausführungsbeispiel nur zur Vereinfachung im Hinblick auf die Längsachse symmetrische Reibwerte µ verwendet werden. Der symmetrische Bremseingriff wird aber ebenso vorgenommen, wenn die Reibwerte µ zur Längsachse unsymmetrisch sind.

## Patentansprüche

1. Steuersystem zur variablen Drehmomentverteilung für ein vierradgetriebenes Fahrzeug mit einem Bremsregelsystem, durch das ein radselektiver Bremseingriff möglich ist, **dadurch gekennzeichnet, daß** eine nicht-variable Längssperre (1) mit vorgegebenem Drehmomentverteilungsverhältnis vorgesehen ist und daß, wenn kein Schlupf vorliegt, zur Änderung des Drehmomentverteilungsverhältnisses zwischen den Rädern (4, 5) der Hinterachse (3) und den Rädern (6, 7) der Vorderachse (2) ein symmetrischer Bremseingriff an den Rädern (6, 7) der Achse (2) vorgenommen wird, deren Drehmomentübertragungsanteil im Verhältnis zur anderen Achse (3) verkleinert werden soll.

2. Steuersystem nach Patentanspruch 1, **dadurch gekennzeichnet, daß** das Motormoment automatisch um einen Betrag erhöht wird, der dem Gesamtbremsmoment des Bremseingriffes entspricht.

3. Steuersystem nach Patentanspruch 1, **dadurch gekennzeichnet, daß** der Fahrer eine Empfehlung zur Motormomenterhöhung erhält, bis eine Motormomenterhöhung durch die entsprechende Betätigung des Fahrpedals um einen Betrag erreicht ist, der dem Gesamtbremsmoment des Bremseingriffes entspricht.

## Claims

1. A control system for variable torque distribution for a four-wheel drive vehicle comprising a brake adjustment system for selective brake engagement for each wheel, **characterised in that** a non-variable longitudinal stop (1) having a set torque distribution ratio is provided and if there is no slip, the torque distribution ratio between the wheels (4, 5) on the rear axle (3) and the wheels (6, 7) on the front axle (2) is changed by symmetrical brake engagement of the wheels (6, 7) on that axle (2) for which the proportion of torque transmitted needs to be reduced in relation to the other axle (3).

2. A control system according to claim 1, **characterised in that** the engine torque is automatically increased by an amount corresponding to the total torque of the brake engagement.

3. A control system according to claim 1, **characterised in that** the driver receives a recommendation to increase the engine torque until an increase, by suitable actuation of the accelerator pedal, is reached at a value equal to the total torque of the brake engagement.

## Revendications

1. Système de commande pour une distribution variable de couple pour un véhicule à quatre roues motrices doté d'un système d'ajustage de frein qui permet de procéder individuellement au freinage sur chaque roue,
**caractérisé en ce qu'**
un bloqueur longitudinal (1) non variable est prévu avec un rapport de distribution de couple donné, et lorsqu'il n'y a pas de patinage, une intervention de frein symétrique se produit sur les roues (6, 7) de l'essieu (2) dont la proportion de transfert de couple par rapport à l'autre essieu (3) doit être réduite pour modifier le rapport de distribution de couple entre les roues (4, 5) de l'essieu arrière (3) et celles (6, 7) de l'essieu avant (2).

2. Système de commande selon la revendication 1,
**caractérisé en ce que**
le couple moteur augmente automatiquement d'une valeur correspondant au couple de freinage total de l'intervention de frein.

3. Système de commande selon la revendication 1,
**caractérisé en ce que**
le conducteur reçoit un message lui recommandant d'augmenter le couple moteur jusqu'à ce que cette augmentation du couple moteur obtenue en actionnant la pédale de l'accélérateur en conséquence ait atteint une valeur correspondant au couple de freinage total de l'intervention de frein.
